# EUROPEAN PATENT APPLICATION

(11) **EP 4 845 115 A1**
(43) Date of publication of application: **25.11.2026**
(21) Application number: 25747430.4
(22) Date of filing: 06.01.2025
(51) Int. Cl.: H04L 43/0805

(54) **COMMUNICATION METHOD, COMMUNICATION APPARATUS, AND COMMUNICATION DEVICE**

(30) Priority: 02.02.2024 CN 202410165492
(71) Applicant: Huawei Technologies Co., Ltd., Shenzhen, Guangdong 518129 (CN)
(72) Inventor: LI, Jie, Shenzhen, Guangdong 518129 (CN); JI, Zhigang, Shenzhen, Guangdong 518129 (CN); LIU, Shixing, Shenzhen, Guangdong 518129 (CN); ZHOU, Daolong, Shenzhen, Guangdong 518129 (CN)
(74) Representative: Huawei European IPR
(86) International application number: PCT/CN2025/070717
(87) International publication number: WO 2025/161854

(57) **Abstract**

This application provides a communication method, a communication apparatus, and a communication device. The communication method includes: sending a first packet, where the first packet includes first sequence number information; obtaining second sequence number information of a second packet, where the first packet and the second packet are from a target traffic flow; and determining, based on the first sequence number information and the second sequence number information, that a failure occurs in the target traffic flow.

## Description

This application claims priority to Chinese Patent Application No. 202410165492.3, filed with the China National Intellectual Property Administration on February 2, 2024 and entitled "COMMUNICATION METHOD, COMMUNICATION APPARATUS, AND COMMUNICATION DEVICE", which is incorporated herein by reference in its entirety.

### TECHNICAL FIELD

This application relates to the field of communication technologies, and in particular, to a communication method, a communication apparatus, and a communication device.

### BACKGROUND

Bidirectional forwarding detection (Bidirectional Forwarding Detection, BFD) is a network protocol for quick detection and monitoring of forwarding connectivity of links or internet protocol (Internet Protocol, IP) routing in a network. The BFD can improve performance of existing networks and allows quick detection of communication failures, to enable network devices to establish a backup channel more quickly for communication restoration.

BFD packets are periodically transmitted between network devices at two ends over a connected link. If a network device does not receive a BFD packet within preset duration, the network device may determine that a failure occurs on a link connected to a peer network device.

Through the BFD, only link integrity (to be specific, whether a failure occurs on a link) can be detected, but failures in data flows cannot be sensed. In view of this, a data flow-oriented failure detection solution is urgently needed.

### SUMMARY

This application provides a communication method, a communication apparatus, and a communication device, to detect a failure in a traffic flow.

According to a first aspect, this application provides a communication method. A packet in a target traffic flow may be sent from a source device and then forwarded by a forwarding device to arrive at a destination device. Each packet in the target traffic flow includes sequence number information corresponding to the packet. In this embodiment of this application, the sequence number information of the packet is used to implement important functions such as orderly transmission, retransmission of lost packets, and error recovery, to ensure reliable transmission of a traffic flow in a network.

In this embodiment of this application, the forwarding device receives a first packet in the target traffic flow, where the first packet includes first sequence number information corresponding to the first packet. The forwarding device may obtain second sequence number information of a second packet. Both the first packet and the second packet are from the target traffic flow. In other words, the first packet and the second packet are different packets in a same traffic flow.

In this embodiment of this application, the forwarding device may determine, based on the first sequence number information and the second sequence number information, that a failure occurs in the target traffic flow. During actual application, the target traffic flow includes a plurality of packets, these packets consecutively pass through the forwarding device, and the forwarding device may perform, based on these packets, the communication method in this embodiment of this application, to determine whether the failure occurs in the target traffic flow, and sense, in a timely manner, the failure that occurs in the target traffic flow. In addition, the communication method in this embodiment of this application does not require any modification or extension to an original packet format, to achieve low implementation complexity and high failure detection efficiency.

According to the first aspect, in an optional implementation, the sequence number information of the packet may be a sequence number (Sequence Number) in a TCP header, and the sequence number of the packet indicates a location of data content of the packet in complete data content of the target traffic flow; or the sequence number information of the packet may be an acknowledgment number (Acknowledgment Number) in a TCP header, and the acknowledgment number of the packet indicates a location of the packet that has been successfully received by the destination device in the target traffic flow; or the sequence number information of the packet may be a sequence number and an acknowledgment number in a TCP header; or the sequence number information of the packet may be a packet sequence number (Packet Sequence Number, PSN) in a remote direct memory access (Remote Direct Memory Access, RDMA) packet, and the PSN of the RDMA packet indicates a ranking of the RDMA packet sent or received by using an RDMA queue pair (Queue Pair, QP).

According to the first aspect, in an optional implementation, in a transmission control protocol (Transmission Control Protocol, TCP) scenario, a source IP address of the first packet is the same as a destination IP address of the second packet, a destination IP address of the first packet is the same as a source IP address of the second packet, a source port of the first packet is the same as a destination port of the second packet, and a destination port of the first packet is the same as a source port of the second packet. The first sequence number information of the first packet includes at least a sequence number (Sequence Number) in a TCP header of the first packet, and the second sequence number information of the second packet includes at least an acknowledgment number (Acknowledgment Number) in a TCP header of the second packet. Optionally, during actual application, a transport layer protocol of the first packet is the same as a transport layer protocol of the second packet.

Optionally, the first packet and the second packet are respectively latest packets obtained by the forwarding device in two opposite transmission directions. It is assumed that the target traffic flow includes packets in two opposite transmission directions. If the first packet is a latest packet obtained by the forwarding device in one transmission direction, the second packet is a latest packet obtained by the forwarding device (or another device that has established a peer link with the forwarding device) in the other transmission direction.

The forwarding device obtains the first sequence number information (that is, the sequence number of the first packet) and the second sequence number information (that is, the acknowledgment number of the second packet). If the sequence number in the TCP header of the first packet is greater than the acknowledgment number in the TCP header of the second packet, and a difference between current time and first time of arrival of the second packet is greater than a preset threshold, the forwarding device determines that the failure occurs in the target traffic flow. The current time is time at which the forwarding device performs failure determining on the target traffic flow. During actual application, a frequency, a periodicity, and time at which the forwarding device performs failure determining, and a value of the preset threshold may be adaptively configured based on a service requirement and a network environment, to improve flexibility of the solution. Specifically, for two opposite transmission directions of the target traffic flow, a sequence number of a packet in one direction corresponds to an acknowledgment number of a packet in the other direction. If the difference between the current time and the first time of arrival of the second packet is greater than the preset threshold, it indicates that the forwarding device has not received a packet in the target traffic flow for a long time in the transmission direction of the second packet. In addition, if the sequence number in the TCP header of the first packet is greater than the acknowledgment number in the TCP header of the second packet, it indicates that the target traffic flow is continuously transmitted in the transmission direction of the first packet. In other words, in this case, a fact that the forwarding device has not received the packet in the target traffic flow for a long time in the transmission direction of the second packet cannot be attributed to a stop in the target traffic flow. Therefore, the forwarding device may determine that the failure occurs in the target traffic flow.

According to the first aspect, in an optional implementation, in a TCP scenario, a source IP address of the first packet is the same as a source IP address of the second packet, a destination IP address of the first packet is the same as a destination IP address of the second packet, a source port of the first packet is the same as a source port of the second packet, and a destination port of the first packet is the same as a destination port of the second packet. The first sequence number information of the first packet includes a sequence number and an acknowledgment number in a TCP header of the first packet, and the second sequence number information of the second packet includes a sequence number and an acknowledgment number in a TCP header of the second packet. Optionally, during actual application, a transport layer protocol of the first packet is the same as a transport layer protocol of the second packet.

The first packet is a latest packet currently obtained by the forwarding device, and the second packet is a packet previous to the first packet in a same transmission direction. In other words, the forwarding device first receives the second packet, and then receives the first packet. After the first packet arrives at the forwarding device, the forwarding device uses time at which the first packet arrives at the forwarding device as current time, to determine whether the failure occurs in the target traffic flow. If the sequence number in the TCP header of the first packet is less than or equal to the sequence number in the TCP header of the second packet, the acknowledgment number in the TCP header of the first packet is less than or equal to the acknowledgment number in the TCP header of the second packet, and a difference between the current time and first time of arrival of the second packet is greater than a preset threshold, it indicates that the first packet received by the forwarding device is a retransmitted packet, and the forwarding device may determine that the failure occurs in the target traffic flow. The current time is time at which the first packet arrives at the forwarding device.

According to the first aspect, in an optional implementation, in a TCP scenario, a source IP address of the first packet is the same as a destination IP address of the second packet, a destination IP address of the first packet is the same as a source IP address of the second packet, a source port of the first packet is the same as a destination port of the second packet, and a destination port of the first packet is the same as a source port of the second packet. The first sequence number information of the first packet includes a sequence number (Sequence Number) and an acknowledgment number (Acknowledgment Number) in a TCP header of the first packet, and the second sequence number information of the second packet includes at least a sequence number (Sequence Number) and an acknowledgment number (Acknowledgment Number) in a TCP header of the second packet.

In a possible implementation, the first packet and the second packet are respectively latest packets obtained by the forwarding device in two opposite transmission directions. For example, the first packet is an uplink packet, and the second packet is a downlink packet. In this case, the first packet is a latest uplink packet obtained by the forwarding device in an uplink direction, and the second packet is a latest downlink packet obtained by the forwarding device (or another device that has established a peer link with the forwarding device) in a downlink direction.

The forwarding device obtains the first sequence number information (that is, the sequence number and the acknowledgment number of the first packet) and the second sequence number information (that is, the sequence number and the acknowledgment number of the second packet). If the acknowledgment number in the TCP header of the first packet is less than the sequence number in the TCP header of the second packet, and a difference between current time and second time of arrival of the first packet is greater than a preset threshold, it indicates that the forwarding device can receive a target traffic flow in the direction of the second packet, but the forwarding device has not received a target traffic flow in a same direction as the first packet for a long time (where preset duration is exceeded). Consequently, the acknowledgment number of the first packet stops increasing. Therefore, the forwarding device determines that the failure occurs in the target traffic flow, and an upstream path of the second packet is normal and no failure occurs on the upstream path. The upstream path of the second packet is a path that the second packet passes through during transmission from a transmit end to the forwarding device. In this way, when sensing the target traffic flow, the forwarding device can further determine a normal path that the target traffic flow passes through, to facilitate subsequent failure locating.

According to the first aspect, in an optional implementation, the forwarding device can further determine that the upstream path of the second packet is normal and no failure occurs on the upstream path. In this case, it indicates that a failure cause is unrelated to a device on the upstream path of the second packet (that is, an upstream device of the second packet). Therefore, the forwarding device may send a failure notification to the upstream device of the second packet, where the failure notification indicates that the upstream path of the second packet is normal, so that the upstream device of the second packet does not perform unnecessary path switching.

According to the first aspect, in an optional implementation, the first packet and the second packet are packets in an RDMA protocol, a source IP address of the first packet is the same as a destination IP address of the second packet, a destination IP address of the first packet is the same as a source IP address of the second packet, a queue pair (Queue Pair, QP) of the first packet is different from a QP of the second packet, the first sequence number information includes a PSN of the first packet, and the second sequence number information includes a PSN of the second packet. Specifically, the first packet and the second packet are packets in different transmission directions in a same RDMA flow. In other words, the first packet and the second packet have a same queue pair context (Queue Pair Context, QPC) and a same queue pair key (Queue Pair Key, QKey), but a destination QP (Destination QP) of the first packet is different from a destination QP of the second packet. Optionally, the first packet may be a request packet in an RDMA traffic flow, and the second packet is a response packet in the RDMA traffic flow; or the second packet may be a response packet in an RDMA traffic flow, and the second packet is a request packet in the RDMA traffic flow. If the PSN of the first packet is greater than the PSN of the second packet, and a difference between current time and first time of arrival of the second packet is greater than a preset threshold, it is determined that the failure occurs in the target traffic flow. Specifically, the RDMA protocol provides a response mechanism, and the response mechanism is used to ensure that an RMDA packet can be reliably received. In an RDMA scenario in which the response mechanism is enabled, after receiving a request packet from the source device, the destination device of the target traffic flow determines a PSN of a response packet of the request packet based on a PSN of the request packet. The PSN of the response packet indicates a location of data content of the response packet in complete data content of the target traffic flow, and also indicates a location of the request packet that has been successfully received by the destination device and that is in the target traffic flow. After receiving the response packet, the source device continues to determine a PSN of a new request packet based on the PSN in the response packet, to continue to send the new request packet. Therefore, in the RDMA scenario, for two opposite transmission directions of the target traffic flow, a PSN of a packet in one direction corresponds to a PSN of a packet in the other direction. If the difference between the current time and the first time of arrival of the second packet is greater than the preset threshold, it indicates that the packet in the target traffic flow has not been received for a long time in the transmission direction of the second packet. In addition, if the PSN of the first packet is greater than the PSN of the second packet, it indicates that the target traffic flow is continuously transmitted in the transmission direction of the first packet. In other words, in this case, a fact that the forwarding device has not received the packet in the target traffic flow for a long time in the transmission direction of the second packet cannot be attributed to a stop in the target traffic flow. Therefore, the forwarding device may determine that the failure occurs in the target traffic flow.

According to the first aspect, in an optional implementation, the first packet and the second packet are packets of a same type in an RDMA protocol, a source IP address of the first packet is the same as a source IP address of the second packet, a destination IP address of the first packet is the same as a destination IP address of the second packet, a queue pair (Queue Pair, QP) of the first packet is the same as a QP of the second packet, the first sequence number information includes a PSN of the first packet, and the second sequence number information includes a PSN of the second packet.

The first packet is a latest RDMA packet currently obtained by the forwarding device, and the second packet is an RDMA packet previous to the first packet in a same transmission direction. In other words, the forwarding device first receives the second packet, and then receives the first packet. After the first packet arrives at the forwarding device, the forwarding device uses time at which the first packet arrives at the forwarding device as current time, to determine whether the failure occurs in the target traffic flow. In the RDMA protocol, a PSN of an RDMA packet indicates a location of data content of the RDMA packet in complete data content of the target traffic flow. Therefore, if the PSN of the first packet is less than or equal to the PSN of the second packet, and a difference between current time and first time of arrival of the second packet is greater than a preset threshold, it indicates that the first packet received by the forwarding device is a retransmitted packet, and the forwarding device may determine that the failure occurs in the target traffic flow. The current time is time at which the first packet arrives at the forwarding device.

According to the first aspect, in an optional implementation, a source IP address of the first packet is the same as a destination IP address of the second packet, a destination IP address of the first packet is the same as a source IP address of the second packet, a QP of the first packet is different from a QP of the second packet, the first sequence number information includes a PSN of the first packet, and the second sequence number information includes a PSN of the second packet. Specifically, the first packet and the second packet are packets in different transmission directions in a same RDMA flow. In other words, the first packet and the second packet have a same queue pair context (Queue Pair Context, QPC) and a same queue pair key (Queue Pair Key, QKey), but a destination QP (Destination QP) of the first packet is different from a destination QP of the second packet. Optionally, the first packet may be a request packet in an RDMA traffic flow, and the second packet is a response packet in the RDMA traffic flow; or the second packet may be a response packet in an RDMA traffic flow, and the second packet is a request packet in the RDMA traffic flow. It can be learned from the foregoing that, in an RDMA scenario in which a response mechanism is enabled, a PSN of an RDMA packet indicates a location of data content of the RDMA packet in complete data content of the target traffic flow, and also indicates a location of a packet that has been successfully received by the destination device and that is in the target traffic flow. In other words, for two opposite transmission directions of the target traffic flow, a PSN of a packet in one direction corresponds to a PSN of a packet in the other direction. If the PSN of the first packet is less than the PSN of the second packet, and a difference between current time and second time of arrival of the first packet is greater than a preset threshold, it indicates that the forwarding device can receive a target traffic flow in the direction of the second packet, but the forwarding device has not received a target traffic flow in a same direction as the first packet for a long time (where preset duration is exceeded). Consequently, the PSN of the first packet stops increasing. Therefore, the forwarding device determines that the failure occurs in the target traffic flow, and an upstream path of the second packet is normal and no failure occurs on the upstream path. The upstream path of the second packet is a path that the second packet passes through during transmission to the forwarding device.

According to the first aspect, in an optional implementation, the second packet in the target traffic flow is transmitted to the forwarding device, and the second packet includes the second sequence number information. After receiving the second packet, the forwarding device may obtain the second sequence number information of the second packet. In addition, the forwarding device records time at which the second packet arrives at the forwarding device, to obtain first time of arrival of the second packet. In other words, the first time of arrival of the second packet is the time at which the second packet arrives at the forwarding device.

According to the first aspect, in an optional implementation, the forwarding device establishes peer links (peer links) with several other forwarding devices. The second packet in the target traffic flow is not transmitted to the forwarding device, but is transmitted to another forwarding device that has established a peer link with the forwarding device. In this case, the forwarding device may synchronously receive the second sequence number information of the second packet through the peer link. Therefore, the forwarding device may perform failure determining on the target traffic flow based on the packet in the target traffic flow received by the another forwarding device, so that the communication method in this embodiment of this application is still applicable to a scenario in which transmission paths of the first packet and the second packet are inconsistent, to improve flexibility of the solution and increase application scenarios of the solution. In this case, the first time of arrival of the second packet may be time at which the second packet is transmitted onto the peer link of the forwarding device, or may be time at which the forwarding device receives the second sequence number information. This is not specifically limited herein.

According to the first aspect, in an optional implementation, after determining that the failure occurs in the target traffic flow, the forwarding device generates failure information specific to the target traffic flow, where the failure information indicates that the failure occurs in the target traffic flow.

Optionally, the failure information includes but is not limited to time at which a failure is determined to occur in the target traffic flow, the first sequence number information of the first packet, the second sequence number information of the second packet, and a 5-tuple (or a 3-tuple) of the target traffic flow. For example, the 5-tuple may be a source IP address, a destination IP address, a source port, a destination port, and a transport layer protocol of the target traffic flow in a TCP scenario; and the 3-tuple may be the source IP address, the destination IP address, and a QP of the target traffic flow in an RDMA scenario.

Optionally, the failure information of the target traffic flow may be queried by a management person in real time, or the forwarding device may further send the failure information specific to the target traffic flow to a controller, where the failure information indicates that the failure occurs in the target traffic flow. After receiving the failure information specific to the target traffic flow, the controller may analyze the current failure in the target traffic flow.

According to a second aspect, this application provides a communication apparatus. The communication apparatus includes:
a transceiver unit, configured to receive a first packet, where the first packet includes first sequence number information, where
the transceiver unit is further configured to obtain second sequence number information of a second packet, where the first packet and the second packet correspond to a target traffic flow; and
a processing unit, configured to determine, based on the first sequence number information and the second sequence number information, that a failure occurs in the target traffic flow.

According to the second aspect, in an optional implementation, a source internet protocol IP address of the first packet is the same as a destination IP address of the second packet, a destination IP address of the first packet is the same as a source IP address of the second packet, a source port of the first packet is the same as a destination port of the second packet, a destination port of the first packet is the same as a source port of the second packet, the first sequence number information includes a sequence number in a transmission control protocol TCP header of the first packet, and the second sequence number information includes an acknowledgment number in a TCP header of the second packet.

The processing unit is specifically configured to: when the sequence number in the TCP header of the first packet is greater than the acknowledgment number in the TCP header of the second packet, and a difference between current time and first time of arrival of the second packet is greater than a preset threshold, determine that the failure occurs in the target traffic flow.

According to the second aspect, in an optional implementation, a source IP address of the first packet is the same as a source IP address of the second packet, a destination IP address of the first packet is the same as a destination IP address of the second packet, a source port of the first packet is the same as a source port of the second packet, a destination port of the first packet is the same as a destination port of the second packet, the first sequence number information includes a sequence number and an acknowledgment number in a TCP header of the first packet, and the second sequence number information includes a sequence number and an acknowledgment number in a TCP header of the second packet.

The processing unit is specifically configured to: when the sequence number in the TCP header of the first packet is less than or equal to the sequence number in the TCP header of the second packet, the acknowledgment number in the TCP header of the first packet is less than or equal to the acknowledgment number in the TCP header of the second packet, and a difference between current time and first time of arrival of the second packet is greater than a preset threshold, determine that the failure occurs in the target traffic flow.

According to the second aspect, in an optional implementation, a source IP address of the first packet is the same as a destination IP address of the second packet, a destination IP address of the first packet is the same as a source IP address of the second packet, a source port of the first packet is the same as a destination port of the second packet, a destination port of the first packet is the same as a source port of the second packet, the first sequence number information includes a sequence number and an acknowledgment number in a TCP header of the first packet, and the second sequence number information includes a sequence number and an acknowledgment number in a TCP header of the second packet.

The processing unit is specifically configured to: when the acknowledgment number in the TCP header of the first packet is less than the sequence number in the TCP header of the second packet, and a difference between current time and second time of arrival of the first packet is greater than a preset threshold, determine that an upstream path of the second packet is normal.

According to the second aspect, in an optional implementation, the transceiver unit is further configured to send a failure notification to an upstream device of the second packet, where the failure notification indicates that the upstream path of the second packet is normal.

According to the second aspect, in an optional implementation, the first packet and the second packet are packets in a remote direct memory access RDMA protocol, a source IP address of the first packet is the same as a source IP address of the second packet, a destination IP address of the first packet is the same as a destination IP address of the second packet, a queue pair QP of the first packet is the same as a QP of the second packet, the first sequence number information includes a packet sequence number PSN of the first packet, and the second sequence number information includes a PSN of the second packet.

The processing unit is specifically configured to: when the PSN of the first packet is less than or equal to the PSN of the second packet, and a difference between current time and first time of arrival of the second packet is greater than a preset threshold, determine that the failure occurs in the target traffic flow.

According to the second aspect, in an optional implementation, the first packet and the second packet are packets in a remote direct memory access RDMA protocol, a source IP address of the first packet is the same as a destination IP address of the second packet, a destination IP address of the first packet is the same as a source IP address of the second packet, a QP of the first packet is different from a QP of the second packet, the first sequence number information includes a PSN of the first packet, and the second sequence number information includes a PSN of the second packet.

The processing unit is specifically configured to: when the PSN of the first packet is greater than the PSN of the second packet, and a difference between current time and first time of arrival of the second packet is greater than a preset threshold, determine that the failure occurs in the target traffic flow.

According to the second aspect, in an optional implementation, a source IP address of the first packet is the same as a destination IP address of the second packet, a destination IP address of the first packet is the same as a source IP address of the second packet, a QP of the first packet is different from a QP of the second packet, the first sequence number information includes a PSN of the first packet, and the second sequence number information includes a PSN of the second packet.

The processing unit is specifically configured to: when the PSN of the first packet is less than the PSN of the second packet, and a difference between current time and second time of arrival of the first packet is greater than a preset threshold, determine that an upstream path of the second packet is normal.

According to the second aspect, in an optional implementation, the transceiver unit is specifically configured to receive the second packet, where the second packet includes the second sequence number information.

According to the second aspect, in an optional implementation, the second sequence number information is received through a peer link peer link.

According to the second aspect, in an optional implementation, the transceiver unit is further configured to send failure information specific to the target traffic flow to a controller, where the failure information indicates that the failure occurs in the target traffic flow.

Content such as information exchange and execution processes in the embodiment shown in this aspect is based on a same concept as the embodiment shown in the first aspect. Therefore, for detailed descriptions of beneficial effect shown in this aspect, refer to the first aspect. Details are not described herein again.

According to a third aspect, this application provides a communication device, including a processor. The processor is coupled to a memory. The memory is configured to store instructions. When the instructions are executed by the processor, a computing device is caused to implement the method according to any one of the first aspect or the possible implementations of the first aspect.

According to a fourth aspect, an embodiment of this application provides a computer-readable storage medium. The computer-readable storage medium stores instructions. When the instructions are executed, a computer is caused to perform the method according to any one of the first aspect or the possible implementations of the first aspect.

According to a fifth aspect, an embodiment of this application provides a computer program product. The computer program product stores computer-readable instructions. When the computer-readable instructions are executed by a processor, the method according to any one of the first aspect or the possible implementations of the first aspect is implemented.

According to a sixth aspect, an embodiment of this application provides a chip, including a processor. The processor is coupled to a memory. The memory is configured to store instructions. When the instructions are executed by the processor, the chip is caused to implement the method according to any one of the first aspect or the possible implementations of the first aspect.

For technical effects brought by any implementation of the third aspect to the sixth aspect, refer to technical effects brought by the implementations of the first aspect. Details are not described herein again.

### BRIEF DESCRIPTION OF DRAWINGS

To describe the technical solutions in embodiments of this application or the conventional technology more clearly, the following briefly describes the accompanying drawings for describing embodiments or the conventional technology. It is clear that the accompanying drawings in the following descriptions show only embodiments of this application, and a person of ordinary skill in the art may still derive other drawings from these accompanying drawings without creative efforts.
FIG. 1 is a diagram of a BFD scenario;
FIG. 2 is a diagram of a possible and non-limiting network architecture in a communication method according to an embodiment of this application;
FIG. 3 is a schematic flowchart of a communication method according to an embodiment of this application;
FIG. 4 is an example diagram of a possible scenario in which a forwarding device obtains second sequence number information according to an embodiment of this application;
FIG. 5 is a diagram of a possible scenario of a communication method according to an embodiment of this application;
FIG. 6 is a diagram of another possible scenario of a communication method according to an embodiment of this application;
FIG. 7 is a diagram of another possible scenario of a communication method according to an embodiment of this application;
FIG. 8 is a diagram of a communication method applied to an RDMA scenario according to an embodiment of this application;
FIG. 9 is a diagram of a possible scenario of a communication method according to an embodiment of this application;
FIG. 10 is a diagram of a structure of a communication apparatus according to an embodiment of this application; and
FIG. 11 is a diagram of a logical structure of a communication device according to an embodiment of this application.

### DESCRIPTION OF EMBODIMENTS

Embodiments of this application provide a communication method, a communication apparatus, and a communication device, to detect a failure in a traffic flow.

The following describes embodiments of this application with reference to the accompanying drawings in embodiments of this application. Terms used in implementations of this application are merely used for explaining specific embodiments of this application, and are not intended to limit embodiments of this application. A person of ordinary skill in the art may learn that, with development of technologies and emergence of a new scenario, the technical solutions provided in embodiments of this application are also applicable to a similar technical problem.

In embodiments of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. At least one of the following items (pieces) or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In the specification, the claims, and the accompanying drawings of this application, the terms "first", "second", "third", "fourth", and the like (if any) are intended to distinguish between similar objects but do not necessarily indicate a specific order or sequence. It should be understood that data used in this way is interchangeable in appropriate circumstances, so that embodiments of this application described herein can be implemented in an order different from the order shown or described herein. In addition, the terms "include" and "have" and any other variants are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

The following explains and describes some nouns or terms used in embodiments of this application. These nouns or terms are also used as a part of the content of the present invention.

Transmission control protocol (Transmission Control Protocol, TCP): TCP is an important transport layer protocol of the internet (Internet). TCP provides connection-oriented, reliable, and ordered byte-stream transmission services. Before using TCP, an application program needs to establish a TCP connection. In TCP, mechanisms such as a checksum, a sequence number, an acknowledgment response, retransmission control, connection management, and window control are used to implement reliable transmission.

Remote direct memory access (Remote Direct Memory Access, RDMA): An RDMA technology is a high-performance network communication technology that has advantages such as high bandwidth, low latency, no central processing unit (Central Processing Unit, CPU) overhead, and zero copy. In RDMA, data is directly transmitted to a storage region of a computer over a network, and the data is quickly moved from a system to a remote system memory without affecting an operating system. In this way, few processing functions of the computer are required. RDMA eliminates overheads of external memory copying and context switching, to free up memory bandwidth and CPU cycles to improve performance of application systems.

A sequence number (Sequence Number) field in a TCP header is a 32-bit unsigned integer. The sequence number field plays a key role in TCP data transmission. A sequence number is used to identify a unique location of each byte in a data flow sent from a transmit end to a receive end. Each time data is sent, a sequence number of a TCP packet is incremented so that the receive end can reassemble received data in a correct sequence. The sequence number of the TCP header is necessary because network transmission may disrupt a sequence of data. Based on sequence numbers, the receive end can determine a correct location of each of packets in the data flow and reassemble the packets to restore original data.

An acknowledgment number (Acknowledgment Number) field in a TCP header is also a 32-bit unsigned integer. In TCP communication, an acknowledgment number indicates a location, in a data flow, of a packet that has been successfully received by the receive end. After correctly receiving data, the receive end sends a TCP packet carrying an acknowledgment number as an acknowledgment response to the received data, so that the transmit end knows data that has been correctly received by the receive end, and the transmit end may continue to send subsequent data.

Gray failure (Gray Failure): Gray failures are failures that are difficult to be detected or located. These failures typically do not cause an immediate system-wide crash or service outage, but may exert potential negative impact on system performance, stability, and availability, and may also lead to problems such as data inconsistency or service quality degradation, for example, performance degradation, a random packet loss, memory jitter, and non-fatal exceptions.

The following describes possible application scenarios in embodiments of this application.

In real-world network environments, gray failures such as silent failures, misconfigurations, routing blackholes, hardware failures, or physical port hanging usually exist. Currently, there are a plurality of definitions for gray failures. One definition is: "A system is defined as experiencing a gray failure when at least one application program detects that the system is unhealthy, while a system failure detection tool detects that the system is healthy." Another definition is: "A gray failure is a hardware failure that causes a non-transient packet loss in traffic forwarded by a forwarding device (switch). Congestion is not a gray failure." A common feature of the two definitions is that link failures (such as port failures or link disconnections) are excluded from gray failures.

In the real-world network environments, the gray failure is a major type of network failure, with various manifestations such as performance degradation, a random packet loss, and memory jitter. Currently, there is no effective sensing solution for these gray failures.

Bidirectional forwarding detection (Bidirectional Forwarding Detection, BFD) is a network protocol for quick detection and monitoring of forwarding connectivity of links or internet protocol (Internet Protocol, IP) routing in a network. The BFD can improve performance of existing networks and allows quick detection of communication failures, to enable network devices to establish a backup channel more quickly for communication restoration.

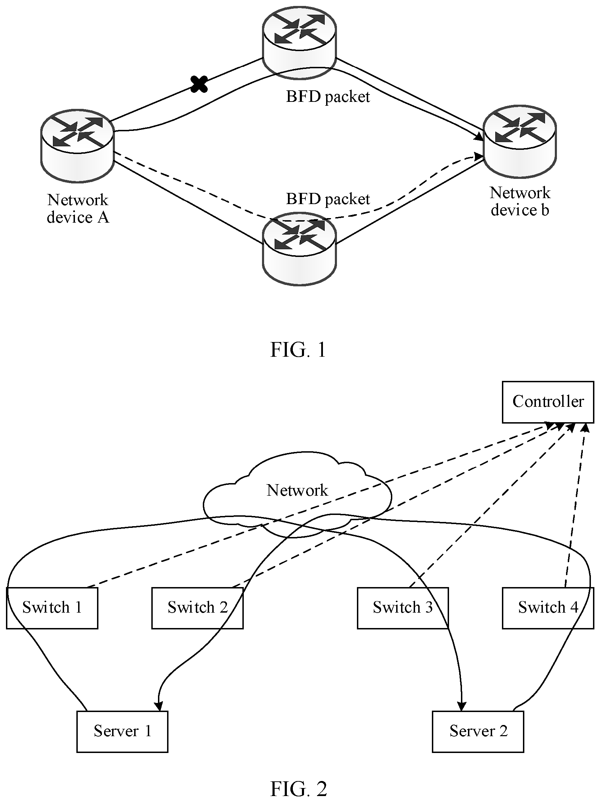

BFD packets are periodically transmitted between network devices at two ends over a connected link. If a network device does not receive a BFD packet within preset duration, the network device may determine that a failure occurs on a link connected to a peer network device. FIG. 1 is a diagram of a BFD scenario. As shown in FIG. 1, there are two available links (a link 1 and a link 2) between a network device A and a network device B, and the network device A periodically sends BFD packets to the network device B through the link 1 and the link 2 separately. If the network device A does not receive a BFD packet from the network device B through the link 1 within preset duration, the network device A determines that a failure occurs on the link 1 connecting the network device A and the network device B. If the network device A receives the BFD packet from the network device B through the link 2, the network device A determines that the link 2 connecting the network device A and the network device B is normal.

Through the BFD, only link integrity (that is, whether a failure occurs on a link) can be detected. However, gray failures are mainly caused by inconsistencies between actual and expected forwarding paths due to reasons such as misconfigurations of routing tables of network devices. In other words, the gray failures are unrelated to link integrity. Therefore, through the BDF, failures that occur in data flows cannot be sensed.

In addition, BFD based failure detection requires a network device to periodically generate BFD packets, and incurs specific resource overheads. In addition, during actual application, the BFD based failure detection and convergence generally take approximately 200 milliseconds. The BFD solution cannot satisfy latency requirements of gaming, autonomous driving, live news broadcasting, or another application that require low latency (for example, latency within 10 milliseconds).

In view of this, embodiments of this application provide a communication method, a communication apparatus, and a communication device, to detect a failure in a traffic flow. For ease of understanding, a possible and non-limiting network architecture in a communication method in an embodiment of this application is first described. FIG. 2 is a diagram of a possible and non-limiting network architecture in a communication method according to an embodiment of this application. In a scenario shown in FIG. 2, the network architecture includes a server 1, a server 2, a switch 1, a switch 2, a switch 3, a switch 4, a controller, and a network (network). The server 1 and the server 2 communicate with each other via several forwarding devices (for example, the switch 1, the switch 2, the switch 3, and the switch 4 shown in FIG. 2). As shown in FIG. 2, a packet sent by the server 1 is transmitted by the switch 1 and the switch 3 and arrives at the server 2, and a packet sent by the server 2 is transmitted by the switch 4 and the switch 2 and arrives at the server 1. The controller, as an analyzer (Analyzer), is configured to receive failure information of traffic flows from the forwarding devices, to analyze a traffic flow in which a failure occurs.

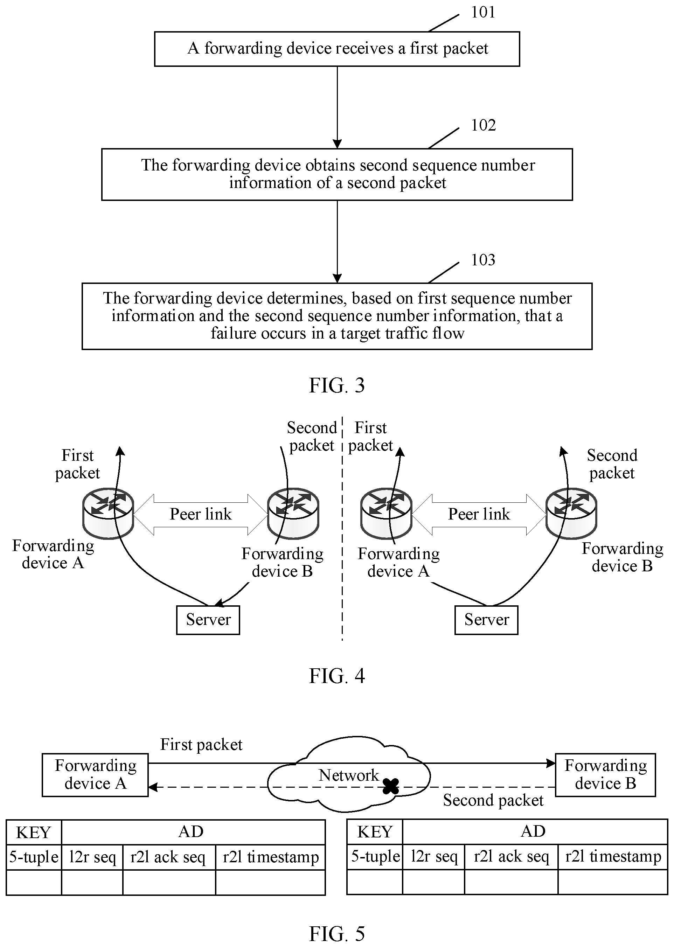

It should be understood that the network architecture shown in FIG. 2 is merely an example for description. During actual application, a failure may occur on any forwarding path in any network structure. The communication method in embodiments of this application is applicable to at least one forwarding device on a transmission path of a traffic flow (packet), to detect a failure in a traffic flow. A forwarding device is a communication entity configured to send a signal, or receive a signal, or send and receive signals. Optionally, the communication entity may be a router, a switch, a virtual switch, a virtual router, an intelligent network interface card, or the like. This is not specifically limited herein. The following describes the communication method in embodiments of this application. FIG. 3 is a schematic flowchart of a communication method according to an embodiment of this application. The communication method in this embodiment of this application is described by using an example in which a forwarding device is used as an execution entity. However, the execution entity in the interaction example is not limited in this application, and a specific hardware form or software form of the forwarding device is not limited in this application either. For example, the forwarding device in FIG. 3 may be a chip, a chip system, or a processor configured to support the forwarding device in implementing the method; or the forwarding device may be a logical node, a logical module, or software configured to implement all or some functions of the forwarding device; or the forwarding device may be a collective name of a plurality of logical nodes, a plurality of logical modules, or a plurality of pieces of software configured to implement the communication method. As shown in FIG. 3, the communication method in this embodiment of this application includes but is not limited to step 101 to step 103.

101: The forwarding device receives a first packet.

The forwarding device is a transit device on a path of a target traffic flow from a source device to a destination device. A packet in the target traffic flow may be sent from the source device and then forwarded by the forwarding device to arrive at the destination device. Each packet in the target traffic flow includes sequence number information corresponding to the packet. In this embodiment of this application, the sequence number information of the packet is used to implement important functions such as orderly transmission, retransmission of lost packets, and error recovery, to ensure reliable transmission of a traffic flow in a network. In a possible implementation, the sequence number information of the packet may be a sequence number (Sequence Number) in a TCP header, and the sequence number of the packet indicates a location of data content of the packet in complete data content of the target traffic flow; or the sequence number information of the packet may be an acknowledgment number (Acknowledgment Number) in a TCP header, and the acknowledgment number of the packet indicates a location of the packet that has been successfully received by the destination device in the target traffic flow; or the sequence number information of the packet may be a sequence number and an acknowledgment number in a TCP header; or the sequence number information of the packet may be a packet sequence number (Packet Sequence Number, PSN) in a remote direct memory access (Remote Direct Memory Access, RDMA) packet, and the PSN of the RDMA packet indicates a ranking of the RDMA packet sent or received by using an RDMA queue pair (Queue Pair, QP).

In this embodiment of this application, the first packet in the target traffic flow is transmitted to the forwarding device, and the first packet includes first sequence number information corresponding to the first packet. After receiving the first packet, the forwarding device sends the first packet to a next-hop device.

102: The forwarding device obtains second sequence number information of a second packet.

The forwarding device obtains the second sequence number information of the second packet. Both the first packet and the second packet are from the target traffic flow. In other words, the first packet and the second packet are different packets in a same traffic flow. The first packet and the second packet may be in a same transmission direction. To be specific, a source IP address of the first packet is the same as a source IP address of the second packet, and a destination IP address of the first packet is the same as a destination IP address of the second packet. Alternatively, the first packet and the second packet may be in different transmission directions. To be specific, a source IP address of the first packet is the same as a destination IP address of the second packet, and a destination IP address of the first packet is the same as a source IP address of the second packet.

In this embodiment of this application, an execution sequence of step 101 and step 102 is not limited. For example, step 101 may be performed first, and then step 102 may be performed; or step 102 may be performed first, and then step 101 may be performed; or step 101 and step 102 are performed simultaneously. This is not specifically limited herein.

In a possible implementation, the second packet in the target traffic flow is transmitted to the forwarding device, and the second packet includes the second sequence number information. After receiving the second packet, the forwarding device may obtain the second sequence number information of the second packet. In addition, the forwarding device records time at which the second packet arrives at the forwarding device, to obtain first time of arrival of the second packet. In other words, the first time of arrival of the second packet is the time at which the second packet arrives at the forwarding device.

In a possible implementation, the forwarding device establishes peer links (peer links) with several other forwarding devices. The second packet in the target traffic flow is not transmitted to the forwarding device, but is transmitted to another forwarding device that has established a peer link with the forwarding device. In this case, the forwarding device may synchronously receive the second sequence number information of the second packet through the peer link. Therefore, the forwarding device may perform failure determining on the target traffic flow based on the packet in the target traffic flow received by the another forwarding device, so that the communication method in this embodiment of this application is still applicable to a scenario in which transmission paths of the first packet and the second packet are inconsistent, to improve flexibility of the solution and increase application scenarios of the solution. In this case, the first time of arrival of the second packet may be time at which the second packet is transmitted onto the peer link of the forwarding device, or may be time at which the forwarding device receives the second sequence number information. This is not specifically limited herein.

For ease of understanding, FIG. 4 is an example diagram of a possible scenario in which the forwarding device obtains the second sequence number information according to an embodiment of this application. As shown in FIG. 4, a forwarding device A establishes a peer link with a forwarding device B. The first packet is transmitted to the forwarding device A, and the second packet is transmitted to the forwarding device B. In this case, the forwarding device B may synchronize the second sequence number information of the second packet to the forwarding device A through the peer link, so that the forwarding device A obtains the second sequence number information of the second packet; or the forwarding device A may synchronize the first sequence number information of the first packet to the forwarding device B through the peer link, so that the forwarding device B obtains the first sequence number information of the first packet.

103: The forwarding device determines, based on the first sequence number information and the second sequence number information, that a failure occurs in the target traffic flow.

In this embodiment of this application, the forwarding device may determine, based on the first sequence number information and the second sequence number information, that the failure occurs in the target traffic flow. During actual application, the target traffic flow includes a plurality of packets, these packets consecutively pass through the forwarding device, and the forwarding device may perform, based on these packets, the communication method in this embodiment of this application, to determine whether the failure occurs in the target traffic flow, and sense, in a timely manner, the failure that occurs in the target traffic flow. In addition, the communication method in this embodiment of this application does not require any modification or extension to an original packet format, to achieve low implementation complexity and high failure detection efficiency.

In a possible implementation, after determining that the failure occurs in the target traffic flow, the forwarding device generates failure information specific to the target traffic flow, where the failure information indicates that the failure occurs in the target traffic flow. Specifically, the failure information may include but is not limited to time at which a failure is determined to occur in the target traffic flow, the first sequence number information of the first packet, the second sequence number information of the second packet, and a 5-tuple (or a 3-tuple) of the target traffic flow. For example, the 5-tuple may be a source IP address, a destination IP address, a source port, a destination port, and a transport layer protocol of the target traffic flow in a TCP scenario; and the 3-tuple may be the source IP address, the destination IP address, and a QP of the target traffic flow in an RDMA scenario. Optionally, the failure information of the target traffic flow may be queried by a management person in real time, or the forwarding device may further send the failure information specific to the target traffic flow to a controller, where the failure information indicates that the failure occurs in the target traffic flow. After receiving the failure information specific to the target traffic flow, the controller may analyze the current failure in the target traffic flow.

In this embodiment of this application, the forwarding device obtains the first sequence number information and the second sequence number information, and may determine, based on a plurality of types of determining logic, whether the failure occurs in the target traffic flow. The following separately describes the plurality of types of determining logic in this embodiment of this application.

First type of determining logic: The forwarding device performs failure determining on the target traffic flow based on two packets in different transmission directions in the target traffic flow.

In the TCP scenario, the source IP address of the first packet is the same as the destination IP address of the second packet, the destination IP address of the first packet is the same as the source IP address of the second packet, a source port of the first packet is the same as a destination port of the second packet, and a destination port of the first packet is the same as a source port of the second packet. The first sequence number information of the first packet includes at least a sequence number (Sequence Number) in a TCP header of the first packet, and the second sequence number information of the second packet includes at least an acknowledgment number (Acknowledgment Number) in a TCP header of the second packet. Optionally, during actual application, a transport layer protocol of the first packet is the same as a transport layer protocol of the second packet.

In a possible implementation, the first packet and the second packet are respectively latest packets obtained by the forwarding device in two opposite transmission directions. It is assumed that the target traffic flow includes packets in two opposite transmission directions. If the first packet is a latest packet obtained by the forwarding device in one transmission direction, the second packet is a latest packet obtained by the forwarding device (or another device that has established a peer link with the forwarding device) in the other transmission direction.

The forwarding device obtains the first sequence number information (that is, the sequence number of the first packet) and the second sequence number information (that is, the acknowledgment number of the second packet). If the sequence number in the TCP header of the first packet is greater than the acknowledgment number in the TCP header of the second packet, and a difference between current time and the first time of arrival of the second packet is greater than a preset threshold, the forwarding device determines that the failure occurs in the target traffic flow. The current time is time at which the forwarding device performs failure determining on the target traffic flow. During actual application, a frequency, a periodicity, and time at which the forwarding device performs failure determining, and a value of the preset threshold may be adaptively configured based on a service requirement and a network environment, to improve flexibility of the solution. Specifically, for two opposite transmission directions of the target traffic flow, a sequence number of a packet in one direction corresponds to an acknowledgment number of a packet in the other direction. If the difference between the current time and the first time of arrival of the second packet is greater than the preset threshold, it indicates that the forwarding device has not received a packet in the target traffic flow for a long time in the transmission direction of the second packet. In addition, if the sequence number in the TCP header of the first packet is greater than the acknowledgment number in the TCP header of the second packet, it indicates that the target traffic flow is continuously transmitted in the transmission direction of the first packet. In other words, in this case, a fact that the forwarding device has not received the packet in the target traffic flow for a long time in the transmission direction of the second packet cannot be attributed to a stop in the target traffic flow. Therefore, the forwarding device may determine that the failure occurs in the target traffic flow.

In the RMDA scenario, the first type of determining logic is also applicable. Specifically, the first packet and the second packet are packets in an RDMA protocol, the source IP address of the first packet is the same as the destination IP address of the second packet, the destination IP address of the first packet is the same as the source IP address of the second packet, and a queue pair (Queue Pair, QP) of the first packet is different from a QP of the second packet. Specifically, the first packet and the second packet are packets in different transmission directions in a same RDMA flow. In other words, the first packet and the second packet have a same queue pair context (Queue Pair Context, QPC) and a same queue pair key (Queue Pair Key, QKey), but a destination QP (Destination QP) of the first packet is different from a destination QP of the second packet. Optionally, the first packet may be a request packet in an RDMA traffic flow, and the second packet is a response packet in the RDMA traffic flow; or the second packet may be a response packet in an RDMA traffic flow, and the second packet is a request packet in the RDMA traffic flow. The first sequence number information includes a PSN of the first packet, and the second sequence number information includes a PSN of the second packet. If the PSN of the first packet is greater than the PSN of the second packet, and a difference between current time and first time of arrival of the second packet is greater than a preset threshold, it is determined that the failure occurs in the target traffic flow. Specifically, the RDMA protocol provides a response mechanism, and the response mechanism is used to ensure that an RMDA packet can be reliably received. In the RDMA scenario in which the response mechanism is enabled, after receiving a request packet from the source device, the destination device of the target traffic flow determines a PSN of a response packet of the request packet based on a PSN of the request packet. The PSN of the response packet indicates a location of data content of the response packet in complete data content of the target traffic flow, and also indicates a location of the request packet that has been successfully received by the destination device and that is in the target traffic flow. After receiving the response packet, the source device continues to determine a PSN of a new request packet based on the PSN in the response packet, to continue to send the new request packet. Therefore, in the RDMA scenario, for two opposite transmission directions of the target traffic flow, a PSN of a packet in one direction corresponds to a PSN of a packet in the other direction. If the difference between the current time and the first time of arrival of the second packet is greater than the preset threshold, it indicates that the packet in the target traffic flow has not been received for a long time in the transmission direction of the second packet. In addition, if the PSN of the first packet is greater than the PSN of the second packet, it indicates that the target traffic flow is continuously transmitted in the transmission direction of the first packet. In other words, in this case, a fact that the forwarding device has not received the packet in the target traffic flow for a long time in the transmission direction of the second packet cannot be attributed to a stop in the target traffic flow. Therefore, the forwarding device may determine that the failure occurs in the target traffic flow.

During actual application, the forwarding device may create a traffic flow table for traffic flows that arrive at the forwarding device. The traffic flow table records sequence number information and time of arrival of packets from the traffic flows, so that the forwarding device may perform failure determining based on a first packet and a second packet in each traffic flow.

FIG. 5 is a diagram of a possible scenario of the communication method according to an embodiment of this application. As shown in FIG. 5, each of a forwarding device A and a forwarding device B may create a traffic flow table for traffic flows that arrive at the forwarding device, where the traffic flow table is used to record sequence number information and time of arrival of packets from the traffic flows. It is assumed that an uplink packet and a downlink packet are packets in two opposite directions of the target traffic flow. The uplink packet and the downlink packet are relative. In the example in FIG. 5, a packet in a direction from the forwarding device A to the forwarding device B is used as an uplink packet, and a packet in a direction from the forwarding device B to the forwarding device A is used as a downlink packet. A KEY field in each entry of the traffic flow table is used to record an identifier of a traffic flow received by the forwarding device, for example, a 5-tuple or a 3-tuple of the traffic flow. An additional data (Additional Data, AD) field in an entry corresponding to the traffic flow is used to record a sequence number (l2r seq in the table) of the uplink packet, an acknowledgment number (r2l ack seq in the table) of the downlink packet, time of arrival (r2l timestamp in the table) of the downlink packet, and the like.

In the scenario shown in FIG. 5, the uplink packet and the downlink packet in the target traffic flow share a same entry in the traffic flow table. The forwarding device may create a table based on a 5-tuple or a 3-tuple of the uplink packet, or may create a table based on a 5-tuple or a 3-tuple of the downlink packet. The following uses an example in which each of the forwarding device A and the forwarding device B create a table based on the 5-tuple of the uplink packet for description. After a 1^{st} packet (regardless of an uplink packet or a downlink packet) of the target traffic flow arrives at a forwarding device, the forwarding device can identify that the packet is an uplink packet or a downlink packet, and then creates, based on a 5-tuple of the packet, an entry specific to the target traffic flow in the traffic flow table. Assuming that the packet is an uplink packet, a sequence number of the uplink packet is recorded. When the forwarding device subsequently receives a new uplink packet in the target traffic flow, the forwarding device updates the sequence number of the uplink packet in the entry of the target traffic flow. If the forwarding device subsequently receives a downlink packet in the target traffic flow, the forwarding device swaps source and destination IP addresses and source and destination ports of the downlink packet to obtain a 5-tuple that matches the entry of the target traffic flow, and then updates a sequence number and time of arrival of the downlink packet in the entry. Next, the forwarding device periodically queries entries of the traffic flows in the traffic flow table, and uses time at which a specific traffic flow is found as current time (curTS) to trigger the forwarding device to perform the first type of determining logic provided in this embodiment of this application. Specifically, when both l2r seq>r2l ack seq and curTS-r2l timestamp>preset threshold (Threshold) are satisfied, it is determined that a failure occurs in a traffic flow corresponding to a currently queried entry. After determining that the failure occurs in the traffic flow, the forwarding device generates failure information specific to the traffic flow, where the failure information indicates that the failure occurs in the traffic flow. Specifically, the failure information may include but is not limited to current time (curTS), a sequence number (l2r seq) of the first packet, an acknowledgment number (r2l ack seq) of the second packet, and a 5-tuple (or a 3-tuple) of the traffic flow. Optionally, the failure information of the target traffic flow may be queried by a management person in real time, or the forwarding device may further send the failure information specific to the traffic flow to a controller, where the failure information indicates that the failure occurs in the traffic flow. After receiving the failure information specific to the traffic flow, the controller may analyze the current failure in the traffic flow.

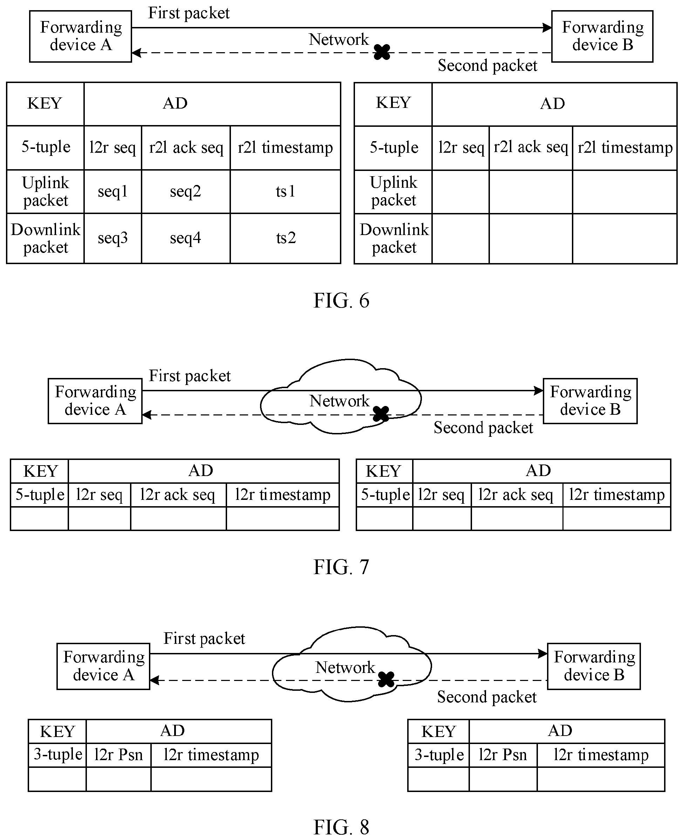

FIG. 6 is a diagram of another possible scenario of the communication method according to an embodiment of this application. As shown in FIG. 6, each of a forwarding device A and a forwarding device B may create a traffic flow table for traffic flows that arrive at the forwarding device. It is assumed that an uplink packet and a downlink packet are packets in two opposite directions of the target traffic flow. The uplink packet and the downlink packet are relative. In the example in FIG. 6, a packet in a direction from the forwarding device A to the forwarding device B is used as an uplink packet, and a packet in a direction from the forwarding device B to the forwarding device A is used as a downlink packet. The uplink packet and the downlink packet of the traffic flow each occupy one entry in the traffic flow table. Each entry records a sequence number (l2r seq in the table), an acknowledgment number (r2l ack seq in the table), and time of arrival (l2r timestamp in the table) at the forwarding device that are of an uplink packet or a downlink packet.

After a 1^{st} packet (regardless of an uplink packet or a downlink packet) of the target traffic flow arrives at a forwarding device, the forwarding device can identify that the packet is an uplink packet or a downlink packet, and then creates, based on a 5-tuple of the packet, an entry specific to the target traffic flow in the traffic flow table. Assuming that the packet is an uplink packet, a sequence number (l2r seq in the table), an acknowledgment number (r2l ack seq in the table), and time of arrival (l2r timestamp in the table) at the forwarding device that are of the uplink packet are recorded in an entry corresponding to the uplink packet. When the forwarding device subsequently receives a new uplink packet in the target traffic flow, the forwarding device updates the sequence number (l2r seq in the table), the acknowledgment number (r2l ack seq in the table), and the time of arrival (l2r timestamp in the table) at the forwarding device in the entry corresponding to the uplink packet. If the packet is a downlink packet, the forwarding device records, in an entry corresponding to the downlink packet, a sequence number (l2r seq in the table), an acknowledgment number (r2l ack seq in the table), and time of arrival (l2r timestamp in the table) at the forwarding device that are of the downlink packet. When the forwarding device subsequently receives a new downlink packet in the target traffic flow, the forwarding device updates the sequence number (l2r seq in the table), the acknowledgment number (r2l ack seq in the table), and the time of arrival (l2r timestamp in the table) at the forwarding device in an entry corresponding to the downlink packet.

Next, the forwarding device periodically queries entries of the traffic flows in the traffic flow table. Time at which a specific entry is found is used as current time (curTS), and a KEY of the entry is swapped (where a source IP address and a destination IP address are swapped, and a source port and a destination port are swapped) to obtain an entry of a traffic flow that belongs to same traffic as the entry and that is in an opposite transmission direction. When both seq1>seq4 and curTS-ts2>preset threshold (Threshold) are satisfied, it is determined that a failure occurs in a traffic flow corresponding to a currently queried entry.

Second type of determining logic: The forwarding device performs failure determining on the target traffic flow based on two packets in a same transmission direction in the target traffic flow.

In the TCP scenario, the source IP address of the first packet is the same as the source IP address of the second packet, the destination IP address of the first packet is the same as the destination IP address of the second packet, a source port of the first packet is the same as a source port of the second packet, and a destination port of the first packet is the same as a destination port of the second packet. The first sequence number information of the first packet includes a sequence number and an acknowledgment number in a TCP header of the first packet, and the second sequence number information of the second packet includes a sequence number and an acknowledgment number in a TCP header of the second packet. Optionally, during actual application, a transport layer protocol of the first packet is the same as a transport layer protocol of the second packet.

The first packet is a latest packet currently obtained by the forwarding device, and the second packet is a packet previous to the first packet in a same transmission direction. In other words, the forwarding device first receives the second packet, and then receives the first packet. After the first packet arrives at the forwarding device, the forwarding device uses time at which the first packet arrives at the forwarding device as current time, to determine whether the failure occurs in the target traffic flow. If the sequence number in the TCP header of the first packet is less than or equal to the sequence number in the TCP header of the second packet, the acknowledgment number in the TCP header of the first packet is less than or equal to the acknowledgment number in the TCP header of the second packet, and a difference between the current time and first time of arrival of the second packet is greater than a preset threshold, it indicates that the first packet received by the forwarding device is a retransmitted packet, and the forwarding device may determine that the failure occurs in the target traffic flow. The current time is time at which the first packet arrives at the forwarding device.

In the RMDA scenario, the second type of determining logic is also applicable. Specifically, the first packet and the second packet are packets of a same type in an RDMA protocol, the source IP address of the first packet is the same as the source IP address of the second packet, the destination IP address of the first packet is the same as the destination IP address of the second packet, a queue pair (Queue Pair, QP) of the first packet is the same as a QP of the second packet, the first sequence number information includes a PSN of the first packet, and the second sequence number information includes a PSN of the second packet.

The first packet is a latest RDMA packet currently obtained by the forwarding device, and the second packet is an RDMA packet previous to the first packet in a same transmission direction. In other words, the forwarding device first receives the second packet, and then receives the first packet. After the first packet arrives at the forwarding device, the forwarding device uses time at which the first packet arrives at the forwarding device as current time, to determine whether the failure occurs in the target traffic flow. In the RDMA protocol, a PSN of an RDMA packet indicates a location of data content of the RDMA packet in complete data content of the target traffic flow. Therefore, if the PSN of the first packet is less than or equal to the PSN of the second packet, and a difference between current time and the first time of arrival of the second packet is greater than a preset threshold, it indicates that the first packet received by the forwarding device is a retransmitted packet, and the forwarding device may determine that the failure occurs in the target traffic flow. The current time is time at which the first packet arrives at the forwarding device.

During actual application, the forwarding device may create a traffic flow table for packets in a single transmission direction of traffic flows. The traffic flow table records sequence number information and time of arrival of the packets in the single transmission direction of the traffic flows, so that the forwarding device may perform failure determining based on a first packet and a second packet in each traffic flow.

FIG. 7 is a diagram of another possible scenario of the communication method according to an embodiment of this application. As shown in FIG. 7, each of a forwarding device A and a forwarding device B may create a traffic flow table for traffic flows that arrive at the forwarding device, where the traffic flow table is used to record sequence number information and time of arrival of packets in a single transmission direction from the traffic flows. In the scenario shown in FIG. 7, the forwarding device creates a traffic flow table only for an uplink packet in each traffic flow. An example in which each of the forwarding device A and the forwarding device B creates a table based on a 5-tuple of the uplink packet is used for description. The uplink packet and the downlink packet are relative. In the example in FIG. 7, a packet in a direction from the forwarding device A to the forwarding device B is used as an uplink packet, and a packet in a direction from the forwarding device B to the forwarding device A is used as a downlink packet. A KEY field in each entry of the traffic flow table is used to record an identifier of a traffic flow received by the forwarding device, for example, a 5-tuple or a 3-tuple of the traffic flow. An additional data (Additional Data, AD) field in an entry corresponding to the traffic flow is used to record a sequence number (l2r seq in the table) of the uplink packet, an acknowledgment number (l2r ack seq in the table) of the uplink packet, time of arrival (l2r timestamp in the table) of the uplink packet, and the like. During actual application, the forwarding device may create a table based on a 5-tuple or a 3-tuple of an uplink packet, and the forwarding device performs failure determining based on two packets in an uplink direction; or the forwarding device may create a table based on a 5-tuple or a 3-tuple of a downlink packet, and the forwarding device performs failure determining based on two packets in a downlink direction.

After a 1^{st} uplink packet in the target traffic flow arrives at the forwarding device, the forwarding device can identify that the packet is an uplink packet, and then creates, based on a 5-tuple of the uplink packet, an entry specific to the target traffic flow in the traffic flow table. The entry includes a sequence number (l2r seq in the table) of the uplink packet, an acknowledgment number (l2r ack seq in the table) of the uplink packet, and time of arrival (l2r timestamp in the table) of the uplink packet. When the forwarding device subsequently receives a new uplink packet in the target traffic flow, the forwarding device is triggered to perform the second type of determining logic provided in this embodiment of this application. The forwarding device uses time at which the new uplink packet arrives at the forwarding device as current time (curTS), uses a packet recorded in the traffic flow table as the second packet, and uses a newly received packet as the first packet. In this case, a sequence number of the packet recorded in the traffic flow table is a second sequence number (l2r seq in the table) of the second packet, an acknowledgment number of the packet recorded in the traffic flow table is a second acknowledgment number (l2r ack seq in the table) of the second packet, time of arrival of the packet recorded in the traffic flow table is a first timestamp (l2r timestamp in the table) of the second packet, a sequence number of the newly received packet is a first sequence number (seq) of the first packet, and an acknowledgment number of the newly received packet is a first acknowledgment number (ack seq) of the first packet.

Specifically, when seq≤l2r seq, ack seq≤l2r ack seq, and curTS-l2r timestamp>preset threshold (Threshold), it is determined that a failure occurs in a traffic flow corresponding to a currently queried entry. If the foregoing conditions are not satisfied, it is determined that no failure occurs in the current target traffic flow. In this case, a newly received packet is used as the second packet, and a sequence number, an acknowledgment number, and time of arrival in an entry specific to the target traffic flow in the traffic flow table are updated to a sequence number, an acknowledgment number, and time of arrival of the newly received packet.

After determining that the failure occurs in the traffic flow, the forwarding device generates failure information specific to the traffic flow, where the failure information indicates that the failure occurs in the traffic flow. Specifically, the failure information may include but is not limited to current time (curTS), a sequence number (seq) of the first packet, an acknowledgment number (ack seq) of the first packet, a sequence number (l2r seq) of the second packet, an acknowledgment number (l2r ack seq) of the second packet, and a 5-tuple (or a 3-tuple) of the traffic flow. Optionally, the failure information of the target traffic flow may be queried by a management person in real time, or the forwarding device may further send the failure information specific to the traffic flow to a controller, where the failure information indicates that the failure occurs in the traffic flow. After receiving the failure information specific to the traffic flow, the controller may analyze the current failure in the traffic flow.

In the RMDA scenario, the second type of determining logic is also applicable. Specifically, the first packet and the second packet are packets of a same type in an RDMA protocol, the source IP address of the first packet is the same as the source IP address of the second packet, the destination IP address of the first packet is the same as the destination IP address of the second packet, a queue pair (Queue Pair, QP) of the first packet is the same as a QP of the second packet, the first sequence number information includes a PSN of the first packet, and the second sequence number information includes a PSN of the second packet. If the PSN of the first packet is less than or equal to the PSN of the second packet, and a difference between current time and time of arrival is greater than a preset threshold, it is determined that the failure occurs in the target traffic flow. Specifically, the RDMA packet includes but is not limited to a plurality of packet types such as a send (SEND) packet, a receive (RECEIVE) packet, a read (READ) packet, and a write (WRITE) packet. PSNs of different types of RDMA packets are independent of each other. In the communication method in this embodiment of this application, failure determining is performed based on two packets (the first packet and the second packet) of a same type in the RDMA protocol.

FIG. 8 is a diagram of the communication method applied to the RDMA scenario according to an embodiment of this application. As shown in FIG. 8, each of a forwarding device A and a forwarding device B may create a traffic flow table for traffic flows that arrive at the forwarding device, where the traffic flow table is used to record sequence number information and time of arrival of packets in a single transmission direction from the traffic flows. In the scenario shown in FIG. 8, the forwarding device creates a traffic flow table only for an uplink packet in each traffic flow. The uplink packet and the downlink packet are relative. In the example in FIG. 8, a packet in a direction from the forwarding device A to the forwarding device B is used as an uplink packet, and a packet in a direction from the forwarding device B to the forwarding device A is used as a downlink packet. An example in which each of the forwarding device A and the forwarding device B creates a table based on a 3-tuple of an uplink packet of an RDMA type is used for description. A KEY field in each entry of the traffic flow table is used to record an identifier of a traffic flow received by the forwarding device, for example, a 3-tuple (a source IP address, a destination IP address, and a QP) of an RDMA flow. An additional data (Additional Data, AD) field in an entry corresponding to the RDMA flow is used to record a PSN (l2r PSN shown in the table) of the uplink packet, time of arrival (l2r timestamp in the table) of the uplink packet, and the like.

During actual application, the forwarding device may create a table based on a 3-tuple of an uplink packet, and the forwarding device performs failure determining based on two packets in an uplink direction; or the forwarding device may create a table based on a 3-tuple of a downlink packet, and the forwarding device performs failure determining based on two packets in a downlink direction.

After a 1^{st} uplink packet in the target traffic flow arrives at the forwarding device, the forwarding device can identify that the packet is an uplink packet, and then create, based on a 5-tuple of the uplink packet, an entry specific to the target traffic flow in the traffic flow table. The entry includes a PSN (l2r PSN shown in the table) of the uplink packet and time of arrival (l2r timestamp in the table) of the uplink packet. When the forwarding device subsequently receives a new uplink packet in the target traffic flow, the forwarding device is triggered to perform the second type of determining logic provided in this embodiment of this application. The forwarding device uses time at which the new uplink packet arrives at the forwarding device as current time (curTS), uses a packet recorded in the traffic flow table as the second packet, and uses a newly received packet as the first packet. In this case, a PSN of the packet recorded in the traffic flow table is a second PSN (l2r PSN shown in the table) of the second packet, time of arrival of the packet recorded in the traffic flow table is a first timestamp (l2r timestamp in the table) of the second packet, and a PSN of the newly received packet is a first PSN (PSN) of the first packet.

Specifically, when PSN≤l2r PSN and curTS-l2r timestamp>preset threshold (Threshold), it is determined that a failure occurs in a traffic flow corresponding to the currently queried entry. If the foregoing conditions are not satisfied, it is determined that no failure occurs in the current target traffic flow. In this case, a newly received packet is used as the second packet, and a sequence number, an acknowledgment number, and time of arrival in an entry specific to the target traffic flow in the traffic flow table are updated to a sequence number, an acknowledgment number, and time of arrival of the newly received packet.

Third type of determining logic: The forwarding device performs failure determining on the target traffic flow based on two packets in different transmission directions in the target traffic flow.

In the TCP scenario, the source IP address of the first packet is the same as the destination IP address of the second packet, the destination IP address of the first packet is the same as the source IP address of the second packet, a source port of the first packet is the same as a destination port of the second packet, and a destination port of the first packet is the same as a source port of the second packet. The first sequence number information of the first packet includes a sequence number (Sequence Number) and an acknowledgment number (Acknowledgment Number) in a TCP header of the first packet, and the second sequence number information of the second packet includes at least a sequence number (Sequence Number) and an acknowledgment number (Acknowledgment Number) in a TCP header of the second packet.

In a possible implementation, the first packet and the second packet are respectively latest packets obtained by the forwarding device in two opposite transmission directions. For example, the first packet is an uplink packet, and the second packet is a downlink packet. In this case, the first packet is a latest uplink packet obtained by the forwarding device in an uplink direction, and the second packet is a latest downlink packet obtained by the forwarding device (or another device that has established a peer link with the forwarding device) in a downlink direction.

The forwarding device obtains the first sequence number information (that is, the sequence number and the acknowledgment number of the first packet) and the second sequence number information (that is, the sequence number and the acknowledgment number of the second packet). If the acknowledgment number in the TCP header of the first packet is less than the sequence number in the TCP header of the second packet, and a difference between current time and second time of arrival of the first packet is greater than a preset threshold, it indicates that the forwarding device can receive a target traffic flow in the direction of the second packet, but the forwarding device has not received a target traffic flow in a same direction as the first packet for a long time (where preset duration is exceeded). Consequently, the acknowledgment number of the first packet stops increasing. Therefore, the forwarding device determines that the failure occurs in the target traffic flow, and an upstream path of the second packet is normal and no failure occurs on the upstream path. The upstream path of the second packet is a path that the second packet passes through during transmission to the forwarding device. In this way, when sensing the target traffic flow, the forwarding device can further determine a normal path that the target traffic flow passes through, to facilitate subsequent failure locating.

In the RMDA scenario, the third type of determining logic is also applicable. Specifically, the source IP address of the first packet is the same as the destination IP address of the second packet, the destination IP address of the first packet is the same as the source IP address of the second packet, and a QP of the first packet is different from a QP of the second packet. Specifically, the first packet and the second packet are packets in different transmission directions in a same RDMA flow. In other words, the first packet and the second packet have a same queue pair context (Queue Pair Context, QPC) and a same queue pair key (Queue Pair Key, QKey), but a destination QP (Destination QP) of the first packet is different from a destination QP of the second packet. Optionally, the first packet may be a request packet in an RDMA traffic flow, and the second packet is a response packet in the RDMA traffic flow; or the second packet may be a response packet in an RDMA traffic flow, and the second packet is a request packet in the RDMA traffic flow. The first sequence number information includes a PSN of the first packet, and the second sequence number information includes a PSN of the second packet. It can be learned from the foregoing that, in the RDMA scenario in which a response mechanism is enabled, a PSN of an RDMA packet indicates a location of data content of the RDMA packet in complete data content of the target traffic flow, and also indicates a location of a packet that has been successfully received by the destination device and that is in the target traffic flow. In other words, for two opposite transmission directions of the target traffic flow, a PSN of a packet in one direction corresponds to a PSN of a packet in the other direction. If the PSN of the first packet is less than the PSN of the second packet, and a difference between current time and second time of arrival of the first packet is greater than a preset threshold, it indicates that the forwarding device can receive a target traffic flow in the direction of the second packet, but the forwarding device has not received a target traffic flow in a same direction as the first packet for a long time (where preset duration is exceeded). Consequently, the PSN of the first packet stops increasing. Therefore, the forwarding device determines that the failure occurs in the target traffic flow, and an upstream path of the second packet is normal and no failure occurs on the upstream path. The upstream path of the second packet is a path that the second packet passes through during transmission to the forwarding device.

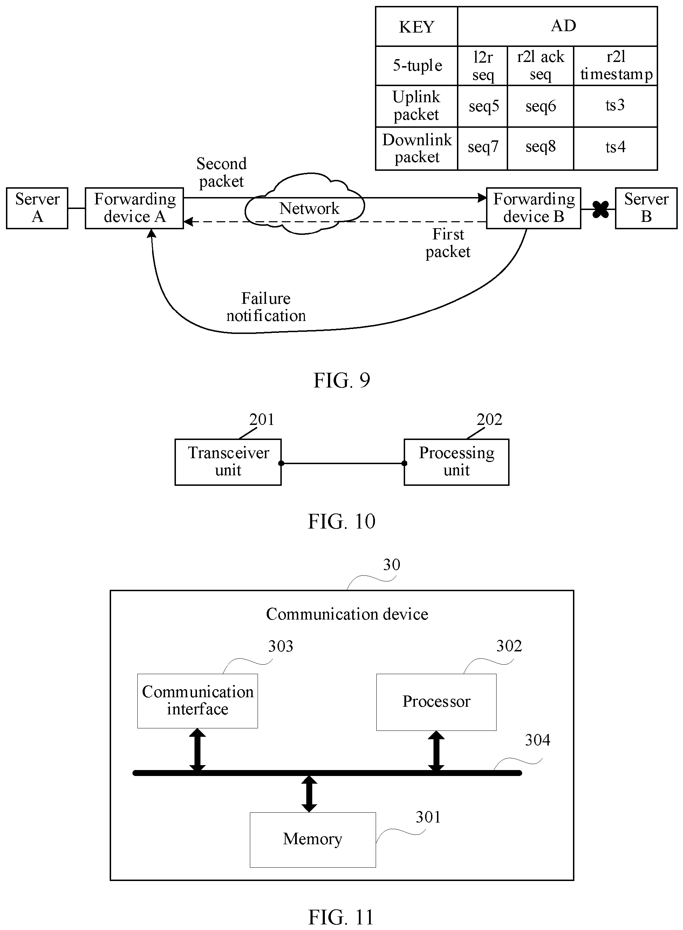

FIG. 9 is a diagram of a possible scenario of the communication method according to an embodiment of this application. As shown in FIG. 9, each of a forwarding device A and a forwarding device B may create a traffic flow table for traffic flows that arrive at the forwarding device, where the traffic flow table is used to record sequence number information and time of arrival of packets from the traffic flows. It is assumed that an uplink packet and a downlink packet are packets in two opposite directions of the target traffic flow. The uplink packet and the downlink packet are relative. In the example in FIG. 7, a packet in a direction from the forwarding device B to the forwarding device A is used as an uplink packet, and a packet in a direction from the forwarding device A to the forwarding device B is used as a downlink packet. A KEY field in each entry of the traffic flow table is used to record an identifier of a traffic flow received by the forwarding device, for example, a 5-tuple or a 3-tuple of the traffic flow. An additional data (Additional Data, AD) field in an entry corresponding to the traffic flow is used to record an acknowledgment number (l2r ack seq in the table) of the uplink packet, a sequence number (r2l seq in the table) of the downlink packet, time of arrival (r2l timestamp in the table) of the downlink packet, and the like. The forwarding device B shown in FIG. 9 is used as an example. If seq7>seq6 and current time (curTS)-second time of arrival (ts3)>preset threshold (Threshold), the forwarding device B determines that the failure occurs in the target traffic flow, and an upstream path of the second packet is normal and no failure occurs on the upstream path. A specific table creation process is similar to that in the descriptions in the embodiments shown in FIG. 5 to FIG. 8, and is not detailed herein again.

In a possible implementation, there are a plurality of forwarding devices on a transmission path of the target traffic flow, and each forwarding device may determine, by using the communication method provided in embodiments of this application, that the failure occurs in the target traffic flow. One or more types of determining logic provided in embodiments of this application may be configured as desired in each forwarding device. If the first packet and the second packet that are received by the forwarding device satisfy any type of determining logic in embodiments of this application, the forwarding device may determine that the failure occurs in the target traffic flow.

Further, as shown in FIG. 9, in the third type of determining logic in embodiments of this application, the forwarding device can further determine that the upstream path of the second packet is normal and no failure occurs on the upstream path. In this case, it indicates that a failure cause is unrelated to a device on the upstream path of the second packet (that is, an upstream device of the second packet). Therefore, the forwarding device may send a failure notification to the upstream device of the second packet, where the failure notification indicates that the upstream path of the second packet is normal, so that the upstream device of the second packet does not perform unnecessary path switching. For example, the failure notification includes but is not limited to a 5-tuple or a 3-tuple of the target traffic flow.

Correspondingly, embodiments of this application further provide related apparatuses configured to implement the foregoing solution. Specifically, FIG. 10 is a diagram of a structure of a communication apparatus according to an embodiment of this application. The communication apparatus in FIG. 10 may be a chip, a chip system, or a processor configured to support a forwarding device in implementing the method; or the communication apparatus may be a logical node, a logical module, or software configured to implement all or some functions of the communication apparatus; or the communication apparatus may be a collective name of a plurality of logical nodes, a plurality of logical modules, or a plurality of pieces of software configured to implement the communication method. As shown in FIG. 10, the communication apparatus includes:
a transceiver unit 201, configured to receive a first packet, where the first packet includes first sequence number information, where
the transceiver unit 201 is further configured to obtain second sequence number information of a second packet, where the first packet and the second packet correspond to a target traffic flow; and
a processing unit 202, configured to determine, based on the first sequence number information and the second sequence number information, that a failure occurs in the target traffic flow.

In a possible implementation, a source internet protocol IP address of the first packet is the same as a destination IP address of the second packet, a destination IP address of the first packet is the same as a source IP address of the second packet, a source port of the first packet is the same as a destination port of the second packet, a destination port of the first packet is the same as a source port of the second packet, the first sequence number information includes a sequence number in a transmission control protocol TCP header of the first packet, and the second sequence number information includes an acknowledgment number in a TCP header of the second packet.

The processing unit 202 is specifically configured to: when the sequence number in the TCP header of the first packet is greater than the acknowledgment number in the TCP header of the second packet, and a difference between current time and first time of arrival of the second packet is greater than a preset threshold, determine that the failure occurs in the target traffic flow.

In a possible implementation, a source IP address of the first packet is the same as a source IP address of the second packet, a destination IP address of the first packet is the same as a destination IP address of the second packet, a source port of the first packet is the same as a source port of the second packet, a destination port of the first packet is the same as a destination port of the second packet, the first sequence number information includes a sequence number and an acknowledgment number in a TCP header of the first packet, and the second sequence number information includes a sequence number and an acknowledgment number in a TCP header of the second packet.

The processing unit 202 is specifically configured to: when the sequence number in the TCP header of the first packet is less than or equal to the sequence number in the TCP header of the second packet, the acknowledgment number in the TCP header of the first packet is less than or equal to the acknowledgment number in the TCP header of the second packet, and a difference between current time and first time of arrival of the second packet is greater than a preset threshold, determine that the failure occurs in the target traffic flow.

In a possible implementation, a source IP address of the first packet is the same as a destination IP address of the second packet, a destination IP address of the first packet is the same as a source IP address of the second packet, a source port of the first packet is the same as a destination port of the second packet, a destination port of the first packet is the same as a source port of the second packet, the first sequence number information includes a sequence number and an acknowledgment number in a TCP header of the first packet, and the second sequence number information includes a sequence number and an acknowledgment number in a TCP header of the second packet.

The processing unit 202 is specifically configured to: when the acknowledgment number in the TCP header of the first packet is less than the sequence number in the TCP header of the second packet, and a difference between current time and second time of arrival of the first packet is greater than a preset threshold, determine that an upstream path of the second packet is normal.

In a possible implementation, the transceiver unit 201 is further configured to send a failure notification to an upstream device of the second packet, where the failure notification indicates that the upstream path of the second packet is normal.

In a possible implementation, the first packet and the second packet are packets in a remote direct memory access RDMA protocol, a source IP address of the first packet is the same as a source IP address of the second packet, a destination IP address of the first packet is the same as a destination IP address of the second packet, a queue pair QP of the first packet is the same as a QP of the second packet, the first sequence number information includes a packet sequence number PSN of the first packet, and the second sequence number information includes a PSN of the second packet.

The processing unit 202 is specifically configured to: when the PSN of the first packet is less than or equal to the PSN of the second packet, and a difference between current time and first time of arrival of the second packet is greater than a preset threshold, determine that the failure occurs in the target traffic flow.

In a possible implementation, the first packet and the second packet are packets in a remote direct memory access RDMA protocol, a source IP address of the first packet is the same as a destination IP address of the second packet, a destination IP address of the first packet is the same as a source IP address of the second packet, a QP of the first packet is different from a QP of the second packet, the first sequence number information includes a PSN of the first packet, and the second sequence number information includes a PSN of the second packet.

The processing unit 202 is specifically configured to: when the PSN of the first packet is greater than the PSN of the second packet, and a difference between current time and first time of arrival of the second packet is greater than a preset threshold, determine that the failure occurs in the target traffic flow.

In a possible implementation, a source IP address of the first packet is the same as a destination IP address of the second packet, a destination IP address of the first packet is the same as a source IP address of the second packet, a QP of the first packet is different from a QP of the second packet, the first sequence number information includes a PSN of the first packet, and the second sequence number information includes a PSN of the second packet.

The processing unit 202 is specifically configured to: when the PSN of the first packet is less than the PSN of the second packet, and a difference between current time and second time of arrival of the first packet is greater than a preset threshold, determine that an upstream path of the second packet is normal.

In a possible implementation, the transceiver unit 201 is specifically configured to receive the second packet, where the second packet includes the second sequence number information.

In a possible implementation, the second sequence number information is received through a peer link peer link.

In a possible implementation, the transceiver unit 201 is further configured to send failure information specific to the target traffic flow to a controller, where the failure information indicates that the failure occurs in the target traffic flow.

It should be noted that content such as information exchange between and execution processes of the modules/units in the communication apparatus is based on a same concept as the method embodiment corresponding to FIG. 3 in this application. For specific content, refer to the descriptions in the foregoing method embodiment in this application. Details are not described herein again.

FIG. 11 is a diagram of a logical structure of a communication device 30 according to an embodiment of this application. The communication device 30 in FIG. 11 may be a chip, a chip system, or a processor that is configured to support a forwarding device in implementing the method; or the communication device 30 may be a logical node, a logical module, or software configured to implement all or some functions of the communication device 30; or the communication device 30 may be a collective term of a plurality of logical nodes, a plurality of logical modules, or a plurality of pieces of software configured to implement the communication method. The communication apparatus described in the embodiment corresponding to FIG. 10 may be deployed on the communication device 30, and is configured to implement functions implemented by the forwarding device in the corresponding embodiment in FIG. 3. The communication device 30 includes a memory 301, a processor 302, a communication interface 303, and a bus 304. The memory 301, the processor 302, and the communication interface 303 are in a communication connection with each other through the bus 304.

The memory 301 may be a read-only memory (read-only memory, ROM), a static storage device, a dynamic storage device, or a random access memory (random access memory, RAM). The memory 301 may store a program. When the program stored in the memory 301 is executed by the processor 302, the processor 302 and the communication interface 303 are configured to perform steps 101 to 103 in embodiments of the foregoing communication method.

The processor 302 may be a central processing unit (central processing unit, CPU), a microprocessor, an application-specific integrated circuit (application-specific integrated circuit, ASIC), a graphics processing unit (graphics processing unit, GPU), a digital signal processor (digital signal processor, DSP), a field programmable gate array (field programmable gate array, FPGA) or another programmable logic device, a discrete gate or a transistor logic device, a discrete hardware component, or any combination thereof, and is configured to execute a related program, to implement one or more of steps 101 to 103 in embodiments of the communication method in this application. The steps of the data processing method disclosed with reference to embodiments of this application may be performed by a compiler and an executor. The compiler and the executor may be performed and completed by a hardware decoding processor, or may be performed and completed by a combination of hardware and software modules in the decoding processor. The software module may be in a mature storage medium in the art, such as a random access memory, a flash memory, a read-only memory, a programmable read-only memory, an electrically erasable programmable memory, or a register. The storage medium is in the memory 301. The processor 302 reads information in the memory 301, to perform one or more of steps 101 to 103 in embodiments of the communication method in this application in combination with hardware of the processor 302.

The communication interface 303 uses a transceiver apparatus, for example, but not limited to, a transceiver, to implement communication between the communication device 30 and another device or a communication network.

The bus 304 may implement a path for transmitting information between various components (for example, the memory 301, the processor 302, and the communication interface 303) of the computer device 30. The bus 304 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one bold line is used to represent the bus in FIG. 11, but this does not mean that there is only one bus or only one type of bus.

It should be noted that content such as information exchange between and execution processes of the modules/units in the communication device is based on a same concept as the method embodiment corresponding to FIG. 3 in this application. For specific content, refer to the descriptions in the foregoing method embodiment in this application. Details are not described herein again.

An embodiment of this application further provides a computer program product including instructions. The computer program product may be software or a program product that includes instructions and that can run on a computing device or can be stored on any usable medium. When the computer program product runs on at least one computer device, the at least one computer device is caused to perform the method described in the embodiment shown in FIG. 3.

An embodiment of this application further provides a computer-readable storage medium. The computer-readable storage medium may be any usable medium that can be used for storage by a computing device, or a data storage device, like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the method described in the embodiment shown in FIG. 3.

The communication apparatus provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to cause the chip to perform the method described in the embodiment shown in FIG. 3. Optionally, the storage unit is a storage unit in the chip, for example, a register or a cache. Alternatively, the storage unit may be a storage unit in a wireless access device end but outside the chip, for example, a read-only memory (read-only memory, ROM), another type of static storage device that can store static information and instructions, or a random access memory (random access memory, RAM).

In addition, it should be noted that the described apparatus embodiments are merely examples. The units described as separate parts may or may not be physically separate, and parts displayed as units may or may not be physical units, may be located at one position, or may be distributed on a plurality of network units. Some or all of the modules may be selected based on actual needs to achieve the objectives of the solutions of embodiments. In addition, in the accompanying drawings of the apparatus embodiments provided in embodiments of this application, connection relationships between modules indicate that the modules have communication connections with each other, which may be specifically implemented as one or more communication buses or signal cables.

Based on the descriptions of the foregoing implementations, a person skilled in the art may clearly understand that embodiments of this application may be implemented by software in addition to necessary universal hardware, or certainly by dedicated hardware, including a dedicated integrated circuit, a dedicated CPU, a dedicated memory, a dedicated component, and the like. Generally, any function that can be completed by a computer program can be easily implemented by corresponding hardware. Moreover, a specific hardware structure used to implement a same function may be in various forms, for example, in a form of an analog circuit, a digital circuit, or a dedicated circuit. However, for embodiments of this application, a software program implementation is a better implementation in most cases. Based on such an understanding, the technical solutions according to embodiments of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method described in various embodiments of this application.

All or some of the foregoing embodiments may be implemented by software, hardware, firmware, or any combination thereof. When software is used to implement the foregoing embodiments, all or some of the foregoing embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

## Claims

1. A communication method, comprising:
receiving a first packet, wherein the first packet comprises first sequence number information;
obtaining second sequence number information of a second packet, wherein the first packet and the second packet correspond to a target traffic flow; and
determining, based on the first sequence number information and the second sequence number information, that a failure occurs in the target traffic flow.

2. The method according to claim 1, wherein a source internet protocol IP address of the first packet is the same as a destination IP address of the second packet, a destination IP address of the first packet is the same as a source IP address of the second packet, a source port of the first packet is the same as a destination port of the second packet, a destination port of the first packet is the same as a source port of the second packet, the first sequence number information comprises a sequence number in a transmission control protocol TCP header of the first packet, and the second sequence number information comprises an acknowledgment number in a TCP header of the second packet; and
determining, based on the first sequence number information and the second sequence number information, that the failure occurs in the target traffic flow comprises:
if the sequence number in the TCP header of the first packet is greater than the acknowledgment number in the TCP header of the second packet, and a difference between current time and first time of arrival of the second packet is greater than a preset threshold, determining that the failure occurs in the target traffic flow.

3. The method according to claim 1, wherein a source IP address of the first packet is the same as a source IP address of the second packet, a destination IP address of the first packet is the same as a destination IP address of the second packet, a source port of the first packet is the same as a source port of the second packet, a destination port of the first packet is the same as a destination port of the second packet, the first sequence number information comprises a sequence number and an acknowledgment number in a TCP header of the first packet, and the second sequence number information comprises a sequence number and an acknowledgment number in a TCP header of the second packet; and the method further comprises:
receiving the second packet; and
after receiving the second packet, receiving the first packet; and
determining, based on the first sequence number information and the second sequence number information, that the failure occurs in the target traffic flow comprises:
if the sequence number in the TCP header of the first packet is less than or equal to the sequence number in the TCP header of the second packet, the acknowledgment number in the TCP header of the first packet is less than or equal to the acknowledgment number in the TCP header of the second packet, and a difference between current time and first time of arrival of the second packet is greater than a preset threshold, determining that the failure occurs in the target traffic flow, wherein the current time is time at which the first packet is received.

4. The method according to claim 1, wherein a source IP address of the first packet is the same as a destination IP address of the second packet, a destination IP address of the first packet is the same as a source IP address of the second packet, a source port of the first packet is the same as a destination port of the second packet, a destination port of the first packet is the same as a source port of the second packet, the first sequence number information comprises a sequence number and an acknowledgment number in a TCP header of the first packet, and the second sequence number information comprises a sequence number and an acknowledgment number in a TCP header of the second packet; and
determining, based on the first sequence number information and the second sequence number information, that the failure occurs in the target traffic flow comprises:
if the acknowledgment number in the TCP header of the first packet is less than the sequence number in the TCP header of the second packet, and a difference between current time and second time of arrival of the first packet is greater than a preset threshold, determining that an upstream path of the second packet is normal.

5. The method according to claim 4, wherein the method further comprises:
sending a failure notification to an upstream device of the second packet, wherein the failure notification indicates that the upstream path of the second packet is normal.

6. The method according to claim 1, wherein the first packet and the second packet are packets in a remote direct memory access RDMA protocol, a source IP address of the first packet is the same as a destination IP address of the second packet, a destination IP address of the first packet is the same as a source IP address of the second packet, a QP of the first packet is different from a QP of the second packet, the first sequence number information comprises a PSN of the first packet, and the second sequence number information comprises a PSN of the second packet; and
determining, based on the first sequence number information and the second sequence number information, that the failure occurs in the target traffic flow comprises:
if the PSN of the first packet is greater than the PSN of the second packet, and a difference between current time and first time of arrival of the second packet is greater than a preset threshold, determining that the failure occurs in the target traffic flow.

7. The method according to claim 1, wherein the first packet and the second packet are packets of a same type in a remote direct memory access RDMA protocol, a source IP address of the first packet is the same as a source IP address of the second packet, a destination IP address of the first packet is the same as a destination IP address of the second packet, a queue pair QP of the first packet is the same as a QP of the second packet, the first sequence number information comprises a packet sequence number PSN of the first packet, and the second sequence number information comprises a PSN of the second packet; and
determining, based on the first sequence number information and the second sequence number information, that the failure occurs in the target traffic flow comprises:
if the PSN of the first packet is less than or equal to the PSN of the second packet, and a difference between current time and first time of arrival of the second packet is greater than a preset threshold, determining that the failure occurs in the target traffic flow.

8. The method according to claim 1, wherein a source IP address of the first packet is the same as a destination IP address of the second packet, a destination IP address of the first packet is the same as a source IP address of the second packet, a QP of the first packet is different from a QP of the second packet, the first sequence number information comprises a PSN of the first packet, and the second sequence number information comprises a PSN of the second packet; and
determining, based on the first sequence number information and the second sequence number information, that the failure occurs in the target traffic flow comprises:
if the PSN of the first packet is less than the PSN of the second packet, and a difference between current time and second time of arrival of the first packet is greater than a preset threshold, determining that an upstream path of the second packet is normal.

9. The method according to any one of claims 2 to 8, wherein the method further comprises:
receiving the second packet, wherein the second packet comprises the second sequence number information.

10. The method according to any one of claims 2 to 8, wherein the second sequence number information is received through a peer link peer link.

11. The method according to any one of claims 1 to 10, wherein the method further comprises:
sending failure information specific to the target traffic flow to a controller, wherein the failure information indicates that the failure occurs in the target traffic flow.

12. A communication apparatus, comprising:
a transceiver unit, configured to receive a first packet, wherein the first packet comprises first sequence number information, wherein
the transceiver unit is further configured to obtain second sequence number information of a second packet, wherein the first packet and the second packet are from a target traffic flow; and
a processing unit, configured to determine, based on the first sequence number information and the second sequence number information, that a failure occurs in the target traffic flow.

13. A communication device, comprising a processor, wherein the processor is coupled to a memory;
the memory is configured to store instructions; and
the processor is configured to execute the instructions in the memory, to cause the communication device to perform the method according to any one of claims 1 to 11.

14. A computer-readable storage medium, wherein the computer-readable storage medium stores a computer program, and when the computer program is executed by a processor, the method according to any one of claims 1 to 11 is implemented.

15. A computer program product, wherein the computer program product stores computer-readable instructions, and when the computer-readable instructions are executed by a processor, the method according to any one of claims 1 to 11 is implemented.

16. A chip, wherein the chip comprises a processor, and the processor is coupled to a memory;
the memory is configured to store instructions; and
the processor is configured to execute the instructions in the memory, to cause the chip to perform the method according to any one of claims 1 to 11.
